# EUROPEAN PATENT APPLICATION

(11) **EP 3 340 049 A1**
(43) Date of publication of application: **27.06.2018**
(21) Application number: 16306749.9
(22) Date of filing: 21.12.2016
(51) Int. Cl.: G06F 9/48

(54) **A METHOD AND A CIRCUIT FOR CONTROLLING MEMORY RESOURCES OF AN ELECTRONIC DEVICE**

(71) Applicant: Thomson Licensing, 92130 Issy-les-Moulineaux (FR)
(72) Inventor: COCO, Alessio, 2650 EDEGEM (BE); DE SMEDT, Alex, 2650 EDEGEM (BE); CHANET, Dominique, 2650 EDEGEM (BE); GOEMAERE, Geert, 2650 EDEGEM (BE)
(74) Representative: Coda, Sandrine

(57) **Abstract**

Electronic devices having limited memory resources cannot function in a reliable manner when the memory resources have ran out. In order to manage such a situation and keep the electronic device operating, a mechanism, called Out Of Memory killer, may be implemented in the electronic device. Such an OOM killer, when an out of memory situation arises, randomly selects a program running on the electronic device and terminates it. The invention consists in associating a weight to a program running on the electronic device which enables to determine which programs can be terminated because they are not considered essential and those which cannot be terminated without causing a negative impact on the quality of experience of an end-user. Lower weights are associated to programs that can be terminated, higher weights are associated to essential programs.

## Description

### TECHNICAL FIELD

The present invention relates to method for managing out-of-memory situations occurring in electronic devices such as gateways.

### BACKGROUND

Electronic devices having limited memory resources cannot function in a reliable manner when the memory resources have ran out. In order to manage such a situation and keep the electronic device operating, a mechanism, called Out Of Memory killer, may be implemented in the electronic device. Such an OOM killer, when an out of memory situation arises, randomly selects a program running on the electronic device and terminates it. However, the impact of the action triggered by the OOM killer on the electronic device is unpredictable. Thus, sometimes the OOM killer terminates a program which execution provides an essential functionality in the electronic device. In such a case, the electronic device may no longer be operational.

The present invention has been devised with the foregoing in mind.

### SUMMARY OF INVENTION

According to a first aspect of the invention there is provided a computer implemented method for controlling memory resources of an electronic device, said method comprising, when a level of use of the memory resources is greater than or equal to a first threshold called ThCritical:
- terminating an execution of at least one program running on the electronic device, when a weight associated to said at least one program is smaller than or equal to a second threshold called ThWeight,
- triggering a reboot of the electronic device, when a weight associated to all the programs running on the electronic device is greater than said second threshold ThWeight.

The above mentioned method enables the monitoring of the memory resources of an electronic device having a limited amount of memory resources and the triggering of a right action in order to reduce the level of use of the memory resources or restore the memory resources back to its original state depending on the circumstances.

Such a solution offers a better quality of experience to the end users of an electronic device since the memory resources of the electronic device are managed in such a way that an out of memory situation, i.e. a situation in which the memory resources are used to their maximal capacity leading to an unexpected and unwanted reboot of the electronic device causing an interruption of the services, is avoided by controlling the level of use of the memory resources of the electronic device.

Associating a weight to a program running on the electronic device enables to determine which programs can be terminated because they are not considered essential and those which cannot be terminated without causing a negative impact on the quality of experience of an end-user. Lower weights are associated to programs that can be terminated, higher weights are associated to essential programs.

Terminating a program running on the electronic device when the level of use is superior to a first threshold ThCritical in order to reduce the working load of the memory resources avoids a systematic reboot of the electronic device.

When the weights associated to all the programs running on the electronic device is greater than the second threshold ThWeight, an immediate reboot of the electronic device is triggered, clearing the memory resources and restoring all the functions of the electronic device, without any action from a user of the electronic device.

A program running on the electronic device is for example a software managing the bus of the electronic device, one or more software managing VoIP (Voice over IP) service, a web-browser, etc.

According to an embodiment of the invention, the method further comprises triggering a reboot of the electronic device when detecting no program associated to a weight greater to the second threshold ThWeight are running on the electronic device.

According to an embodiment of the invention, since programs were terminated due to an out-of-memory situation, it means that functionalities associated to the programs that were terminated are impaired. In order to restore the full functionality of the electronic device, a reboot of the electronic device is triggered once it has been determined that programs associated to the highest weights are no longer running on the electronic device, meaning the reboot of the electronic device may not impact the quality of experience of an end-user.

According to an embodiment of the invention, the method further comprises scheduling a reboot of the electronic device when the level of use of the memory resources is smaller than the first threshold ThCritical and greater than or equal to a third threshold called ThAlarm.

In this case, some functionalities associated to the programs running on the electronic device are impaired but an immediate reboot is not necessary. A reboot is thus scheduled at a time convenient for the user of the electronic device, for example at night in order to restore the electronic device to its full capacity.

According to an embodiment of the invention, the method further comprises, when the level of use of the memory resources is below the third threshold ThAlarm, re-launching at least one program being associated to the highest weight among the programs that were terminated.

When the level of use of the memory resources of the electronic device enable it, it possible to re-launch programs that were terminated thus restoring some of the functionalities associated to these programs. At some point a reboot of the electronic device is to be scheduled in order to restore the electronic device to its full functionality.

Another object of the invention concerns a circuit for controlling memory resources of an electronic device, said circuit comprising a processor configured to, when a level of use of the memory resources is greater than or equal to a first threshold TAlarm:
- terminate an execution of at least one program running on the electronic device, when a weight associated to said at least one program is smaller than or equal to a second threshold called ThWeight,
- trigger a reboot of the electronic device, when a weight associated to all the programs running on the electronic device is greater than said second threshold ThWeight.

According to an embodiment of the invention, the processor is further configured to trigger a reboot of the electronic device when detecting no program associated to a weight greater to the second threshold ThWeight are running on the electronic device.

According to an embodiment of the invention, the processor is further configured to schedule a reboot of the electronic device when the level of use of the memory resources is smaller than the first threshold ThCritical and greater than or equal to a third threshold called ThAlarm

According to an embodiment of the invention, the processor is further configured to, when a level of use of the memory resources is greater than or equal to a first threshold TAlarm:
- terminate an execution of at least one program running on the electronic device, when a weight associated to said at least one program is smaller than or equal to a second threshold ThWeight,
- trigger a reboot of the electronic device, when a weight associated to all the programs running on the electronic device is greater than said second threshold ThWeight.

Another object of the invention concerns an electronic device comprising a circuit for controlling memory resources of said electronic device.

Said electronic device may be for example a gateway.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** represents an electronic device executing a method according to an embodiment of the invention;
**Figure 2** represents the step of a method for managing the memory resources of an electronic device according to an embodiment of the invention in an out of memory situation.

### DETAILED DESCRIPTION

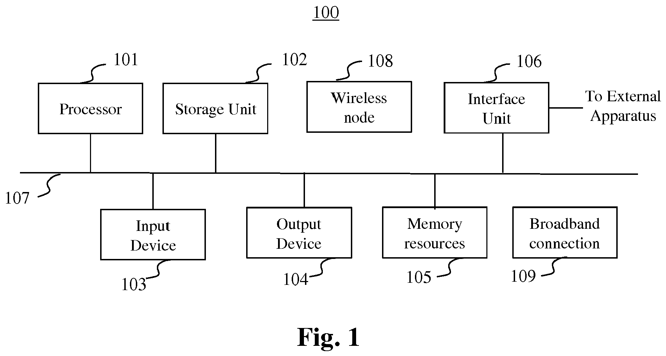

It should be understood that the elements shown in figure 1 may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In the following description, example methods for controlling memory resources of an electronic device, such as a gateway, are described, as well as a device performing the methods. For purposes of explanation, various specific details are set forth in order to provide a thorough understanding of preferred embodiments. It will be evident, however, to one skilled in the art that the present disclosure may be practiced without these specific details.

An electronic device, as represented on **figure 1****,** comprises a processor 101, a storage unit 102, an input device 103, a display device 104, memory resources 105 such as RAM and an interface unit 106 which are connected by a bus 107. Of course, constituent elements of the computer apparatus 100 may be connected by a connection other than a bus connection.

The processor 101 controls operations of the apparatus 100. The storage unit 102 stores at least one program capable of managing the memory resources 105 to be executed by the processor 101, and parameters used by computations performed by the processor 101, intermediate data of computations performed by the processor 101, and so on. The processor 101 may be formed by any known and suitable hardware, or software, or a combination of hardware and software. For example, the processor 101 may be formed by dedicated hardware such as a processing circuit, or by a programmable processing unit such as a CPU (Central Processing Unit) that executes a program stored in a memory thereof.

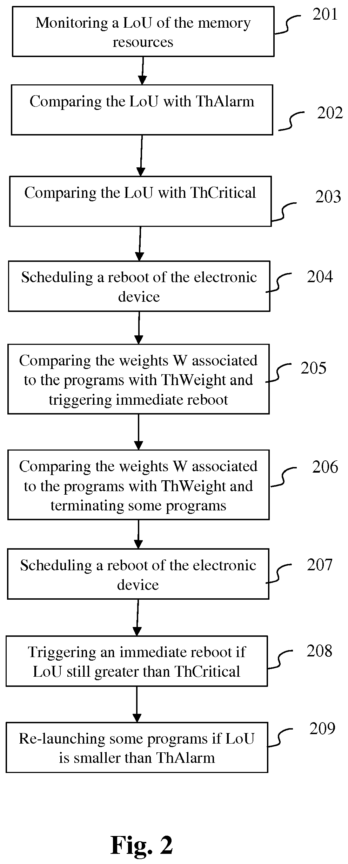

The storage unit 102 may be formed by any suitable storage or means capable of storing the program, data, or the like in a computer-readable manner. Examples of the storage unit 102 include non-transitory computer-readable storage media such as semiconductor memory devices, and magnetic, optical, or magneto-optical recording media loaded into a read and write unit. The program causes the processor 101 to perform a process for managing the memory resources 105 according to an embodiment of the present disclosure as described hereinafter with reference to figure 2.

The input device 103 may be formed by a keyboard, a pointing device such as a mouse, or the like for use by the user to input commands. The output device 104 may be formed by a display device to display, for example, a Graphical User Interface (GUI), images generated according to an embodiment of the present disclosure. The input device 103 and the output device 104 may be formed integrally by a touchscreen panel, for example.

The interface unit 106 provides an interface between the apparatus 100 and an external apparatus. The interface unit 106 may be communicable with the external apparatus via cable or wireless communication. In an embodiment, the external apparatus may be a USB hard drive.

In the case where the electronic device 100 is a gateway, it may further comprise a wireless node 108 for a wireless communication, and a circuit for a broadband connection 109, e.g. an xDSL connection. The wireless node108 includes, but is not limited to, a software driver, a physical layer with data buffers, and an antenna. In this embodiment, the electronic device 100 may not comprise the input device 103 and the output device 104.

Such an electronic device 100 has a limited memory resources cannot function in a reliable manner when the memory resources have ran out.

**Figure 2** represents the step of a method for managing the memory resources 105 of an electronic device 100 according to an embodiment of the invention in an out of memory situation.

Since the electronic device 100 is a closed system, all the programs currently running on the electronic device 100 are identified. In an electronic device, there are at least two different categories of programs running on the electronic device 100 : programs that can be terminated and programs that cannot be terminated. For example, an operating system is a program that cannot be terminated whereas a program managing file sharing is a program that can be terminated. In an embodiment of the invention, a weight W is associated to each program running on the electronic device 100. Such a weight W is, for example an integer comprised between 0 and +∞ : 0 ≤ W ≤ +∞. In an embodiment of the invention, a program that cannot be terminated has a weight W set to +∞ whereas a program that can be terminated has a weight W set to lower values such as 20 or 5 or 33 for example. In another embodiments of the invention, a program that cannot be terminated has a weight W set to higher values such as 90 or 75 for example.

Weights W may be statically associated to each program that may be running on the electronic device 100 or may updated depending they are currently running on the electronic device 100 or not. For example, a bonus may be added to the value of the weight associated to a program currently running on the electronic device 100.

In a step 201, a level of use LoU of the memory resources 105 of the electronic device is monitored. Such a monitoring may be scheduled at regular timeslots in order to detect an out of memory situation quickly. In an embodiment of the invention, a timer is set on certain duration and when the time is out, the monitoring of the memory resources is triggered.

In a step 202, the processor 101 compares the level of use LoU of the memory resources 105, obtained from the monitoring of the memory resources performed during step 201, to a first threshold ThAlarm. The first threshold ThAlarm is, for example, expressed as a percentage of the memory resources used to run programs on the electronic device 100. As an example, the first threshold ThAlarm may be set at 70%, meaning 70% of the memory resources are used.

The value of the first threshold ThAlarm may be set either by the manufacturer of the electronic device 100 or by the end-user of the electronic device 100 ensuring that this threshold corresponds to his/her needs. The first threshold ThAlarm may take other values depending on the configuration of the electronic device, for example the first threshold ThAlarm may be set at 85%, or 70%, or 50% etc.

In a step 203, the processor 101 compares the level of use LoU of the memory resources 105, obtained from the monitoring of the memory resources performed during step 201, to a second threshold ThCritical. The second threshold ThCritical is, for example, expressed as a percentage of the memory resources used to run programs on the electronic device 100. As an example, the second threshold ThCritical may be set at 90%, meaning 90% of the memory resources are used.

The value of the second threshold ThCritical may be set either by the manufacturer of the electronic device 100 or by the end-user of the electronic device 100 ensuring that this threshold corresponds to his/her needs. The second threshold ThCritical may take other values depending on the configuration of the electronic device 100, for example the second threshold ThCritical may be set at 90%, or 95%, or 100%, etc. The second threshold ThCritical is always greater than the first threshold ThAlarm.

If the level of use LoU, obtained from the monitoring, is greater than or equal to the first threshold ThAlarm and lower than the second threshold ThCritical, then in a step 204, the processor 101 of the electronic device 100 schedules a reboot of the electronic device at a later time. For example, the reboot of the electronic device is scheduled in the middle of the night so as to not disturb the end-user.

If the level of use LoU, obtained from the monitoring executed during step 201, is greater than or equal to the second threshold ThCritical, then in a step 205, the processor 101 of the electronic device 100 compares the weights W associated to the programs currently running on the electronic device 100 to a third threshold ThWeight.

If the weights W associated to all the programs currently running on the electronic device 100 are greater than the third threshold ThWeight, then the processor 101 of the electronic device 100 triggers an immediate reboot of the electronic device because essential functionalities of the electronic device 100 are impaired.

For example if the third threshold ThWeight is set to 1000, if the weight associated to all the programs currently running is set to +∞, the processor 101 triggers a reboot of the electronic device 100.

During a step 206, the processor 101 of the electronic device 100 compares the weight W associated to the programs currently running on the electronic device 100 to the third threshold ThWeight. If some of the programs currently running on the electronic device 100 are associated to weights smaller than or equal to the third threshold ThWeight, then the processor 101 terminates those programs in order to reduce the working load of the memory resources 105 of the electronic device 100. The processor 101 first terminates the programs associated with the lowest weights.

For example if the third threshold ThWeight is set to 1000, if the weight associated to a program currently running is set to 700, the processor 101 terminates the program.

Since the processor 101 of the electronic device 100 terminates at least one program currently running on the electronic device 100 during step 206, it means that some functionalities of the electronic device associated to said terminated programs are impaired. The processor 101 then schedules a reboot of the electronic device 100 during a step 207.

This reboot is to take place when no program associated to a weight greater than the third threshold ThWeight is currently running on the electronic device 100. In other words, this reboot is triggered when only programs associated to a weight W smaller than the third threshold ThWeight are currently running on the electronic device 100.

In a step 208, if the level of use LoU is still greater than the second threshold ThCritical after the processor 101 terminated at least one program during step 206, then the electronic device 100 triggers an immediate reboot of the electronic device because essential functionalities of the electronic device 100 are impaired as in step 205.

In a step 209, if the level of use LoU, obtained from a new monitoring executed prior to the reboot scheduled during step 207, is lower than the first threshold ThAlarm, then the processor 101 re-launches some programs that were terminated during step 206, thus restoring some of the functionalities associated to said terminated programs. The processor 101 of the electronic device 100 first re-launches the programs associated with the highest weights.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A computer implemented method for controlling memory resources of an electronic device, said method comprising, when a level of use of the memory resources is greater than or equal to a first threshold called ThCritical:
- terminating an execution of at least one program running on the electronic device, when a weight associated to said at least one program is smaller than or equal to a second threshold called ThWeight,
- triggering a reboot of the electronic device, when a weight associated to all the programs running on the electronic device is greater than said second threshold ThWeight.

2. The method according to claim 1, further comprising triggering a reboot of the electronic device when detecting no program associated to a weight greater to the second threshold ThWeight are running on the electronic device.

3. The method according to claim 1, further comprising scheduling a reboot of the electronic device when the level of use of the memory resources is smaller than the first threshold ThCritical and greater than or equal to a third threshold called ThAlarm.

4. The method according to any of the preceding claims, further comprising, when the level of use of the memory resources is below the third threshold ThAlarm, re-launching at least one program being associated to the highest weight among the programs that were terminated.

5. A circuit for controlling memory resources of an electronic device, said circuit comprising a processor configured to, when a level of use of the memory resources is greater than or equal to a first threshold called ThCritical:
- terminate an execution of at least one program running on the electronic device, when a weight associated to said at least one program is smaller than or equal to a second threshold called ThWeight,
- trigger a reboot of the electronic device, when a weight associated to all the programs running on the electronic device is greater than said second threshold ThWeight.

6. The circuit according to claim 5, wherein the processor is further configured to trigger a reboot of the electronic device when detecting no program associated to a weight greater to the second threshold ThWeight are running on the electronic device.

7. The circuit according to claim 5, wherein the processor is further configured to schedule a reboot of the electronic device when the level of use of the memory resources is smaller than the first threshold ThCritical and greater than or equal to a third threshold called ThAlarm.

8. The circuit according to any of claims 5 to 7, wherein the processor is further configured to, when a level of use of the memory resources is greater than or equal to a first threshold ThCritical:
- terminate an execution of at least one program running on the electronic device, when a weight associated to said at least one program is smaller than or equal to a second threshold called ThWeight,
- trigger a reboot of the electronic device, when a weight associated to all the programs running on the electronic device is greater than said second threshold ThWeight.

9. An electronic device comprising a circuit for controlling memory resources of said electronic device according to claim 5.

10. A computer program **characterized in that** it comprises program code instructions for the implementation of the method for controlling memory resources of an electronic device according to any of claims 1 to 4 when the program is executed by a processor.

11. A processor readable medium having stored therein instructions for causing a processor to perform the method for controlling memory resources of an electronic device according to any of claims 1 to 4.
